# EUROPEAN PATENT SPECIFICATION

(11) **EP 0 743 238 B1**
(45) Date of publication and mention of the grant of the patent: **07.04.1999**
(21) Application number: 96107128.9
(22) Date of filing: 06.05.1996
(51) Int. Cl.: B62M 23/02

(54) **Pedaling force detecting device of a motor assisted bicycle**
Pedalkraftdetektor für Fahrrad mit Hilfsmotor
Détecteur de force de pédalage pour bicyclette assistée à moteur

(30) Priority: 17.05.1995 JP 118317/95
(43) Date of publication of application: 20.11.1996
(73) Proprietor: HONDA GIKEN KOGYO KABUSHIKI KAISHA, Minato-ku Tokyo (JP)
(72) Inventor: Matsuura, Masaaki, c/o Honda Gijutsu Kenkyusho, Wako-shi, Saitama (JP); Kuroki, Masahiro, c/o Honda Gijutsu Kenkyusho, Wako-shi, Saitama (JP); Tagami, Takuya, c/o Honda Gijutsu Kenkyusho, Wako-shi, Saitama (JP)
(74) Representative: Liska, Horst, Dr.-Ing.

(56) References cited:
- EP-A- 0 636 537
- US-A- 4 026 375

## Description

This invention relates to a motor assisted bicycle in which a power transmission device for transmitting the pedaling force on the crank pedals to the wheels is provided with an assisting motor, and the output of the assisting motor is controlled based on the pedaling force on crank pedals detected by pedaling force detecting means, and more particularly to the pedaling force detecting means.

Japanese Patent Laid-open No. Hei 4-365690 (1992) discloses a pedaling force detecting device for a motor assisted bicycle.

The above-mentioned motor assisted bicycle is provided with a sun gear, ring gear, and a planetary gear mechanism comprising a planetary carrier and planetary gear, the pedaling force on crank pedals inputted to the crank shaft is transmitted to the rear wheel through planetary carrier, planetary gear, and ring gear, and the torque inputted to the ring gear is transmitted to the rear wheel. The magnitude of the pedaling force on the crank pedals is detected based on rotational reaction force of the sun gear.

However, the above-mentioned device has increased number of parts and is large in size inevitably because a planetary gear mechanism is used, such structure is disadvantages. In addition, unless the planetary carrier is manufactured with sufficiently high precision work, an eccentric force is exerted on the sun gear supported rotatably on the periphery of the crank shaft, therefore, the sun gear is trailed by the crank shaft, thereby, the above-mentioned rotational reaction force becomes unstable, the unstable rotational reaction force results in poor detection of pedaling force of the crank pedals.
US-A-4 026 375 discloses a pedaling force detecting device according to the preamble of claim 1.

The present invention is accomplished to solve the above-mentioned problem, and it is an object of the present invention to provide a pedaling force detecting device of a motor assisted bicycle which detects the pedaling force on crank pedals precisely with a device of simple structure.

To attain the above-mentioned object, the invention described in claim 1 involves a motor assisted bicycle with a pedaling force detecting device having a power transmission device for transmitting pedaling force on crank pedals to a wheel and having an assisting motor, the output of which is controlled in dependency of a pedaling force produced by operation of the crank pedals and detected by a pedaling force detecting means, wherein said bicycle is provided with a gear holder supported rotatably on the periphery of a crank shaft carrying the crank pedals, an output member for transmitting a torque to the wheel supported rotatably on the periphery of the crank shaft, and a spur gear arrangement for transmitting the rotational moment of the crank shaft to the output member through an idle shaft supported in parallel to the crank shaft, characterized in that the idle shaft is supported in the gear holder, and the pedaling force detecting means is arranged for detecting the pedaling force as a rotational moment around the crank shaft exerted on the gear holder.

According to the structure described in the claim 1, when a pedaling force is applied on the crank pedals, a rotational moment corresponding to the pedaling force is exerted on the idle shaft for transmitting a torque from the crank shaft to the output member and the gear holder for supporting the spur gear arrangement, and the rotational moment is detected by the pedaling force detecting means.

As described hereinbefore, according to the invention described in the claim 1, the idle shaft is supported in parallel with the crank shaft in the gear holder supported rotatably on the periphery of the crank shaft, the torque of the crank shaft is transmitted to the output member supported rotatably on the periphery of the crank shaft through the spur gear arrangement via the idle shaft, therefore, the torque of the crank shaft is transmitted to the output member without using planetary gear mechanism having many parts or bevel gear which is low in power transmission efficiency, thereby, the structure can be simplified and the power transmission efficiency can be improved. The force is detected based on the rotational moment exerted to the gear holder corresponding to the pedaling force, therefore, the influence of frictional force of parts is suppressed to the minimum, and the pedaling force is detected precisely. By prescribing suitably the gear ratio of the spur gear arrangement, the magnitude of torque transmitted from the crank pedals to the wheels is controlled without restriction.

The invention described in the claim 2, in addition to the structure described in the claim 1, involves the pedaling force detecting device for a motor assisted bicycle in which the gear holder is accommodated in the housings supporting the crank shaft, a pedaling force detecting projection provided on the gear holder is structured so as to be in contact with the pedaling detecting means provided on the housings.

According to the structure described in the claim 2, when a pedaling force is applied to the crank pedals, a rotational moment is exerted on the gear holder, thereby, the pedaling force detecting projection provided on the gear holder presses the pedaling force detecting means provided on the housing.

According to the invention described in the claim 2, the gear holder is contained in the housing which supports the crank shaft and the pedaling force detecting projection provided on the gear holder is in contact with the pedaling force detecting means provided in the housing, thereby, the rotational moment of the gear holder is detected directly to improve more the precision for detection.

According to the structure described in the claim 3, the rotation of rotors of the assisting motor located so as to surround the periphery of the crank shaft is transmitted to the output member through a first one-way clutch. While the assisting motor is not in motion, the first one-way clutch slips, thereby, the rotation of the crank shaft is rotated by the crank pedals without any hindrance.

According to the invention described in the claim 3, the rotors of the assisting motor are located so as to surround the periphery of the crank shaft and the rotors are connected to the output member through the first one-way clutch, thereby, the assisting motor can be located coaxially with the crank shaft to minimize the size, and also while stopping of the assisting motor, the first one-way clutch is allowed to slip, thereby, the crank shaft is rotated by the crank pedals without hindrance.

The invention described in the claim 4, in addition to the structure described in the claim 1, involves the pedaling force detecting device of a motor assisted cycle wherein a second one-way clutch is provided to the spur gear arrangement for transmitting the torque or the crank shaft to the output member through the idle shaft.

According to the structure described in the claim 4, the rotation of the crank shaft is transmitted to the output member through the spur gear arrangement provided with the second one-way clutch. Slipping of the one-way clutch allows the crank pedals to reversely rotate freely.

According to the invention described in the claim 4, the second one-way clutch is provided to the spur gear arrangement for transmitting the torque of the crank shaft to the output member through the idle shaft, thereby, the crank pedals can be rotated reversely as desired to adjust the rotational position as desired.

Embodiments of the present invention will be described referring to the drawings, in which:
Fig. 1 is a side view of a whole bicycle;
Fig. 2 is an enlarged partial cross-sectional view of the power unit along the line 2-2 in Fig. 3;
Fig. 3 is a cross sectional view substantially along the line 3-3 in Fig. 2, but differing from the cut 3-3 showing parts 31 and 44 in cross section;
Fig. 4 is an exploded perspective view of the gear holder and
Fig. 5 is a cross-sectional view of the second embodiment corresponding to Fig. 3.

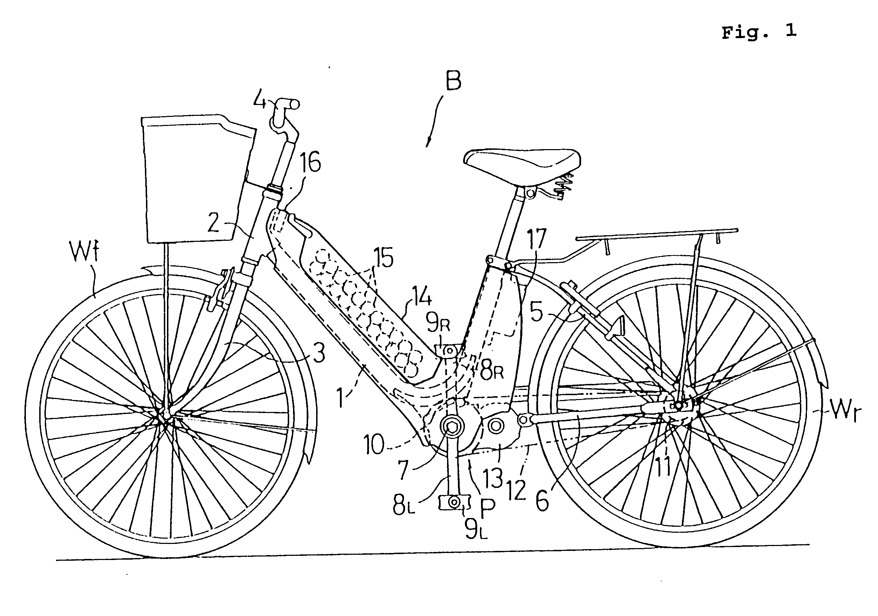

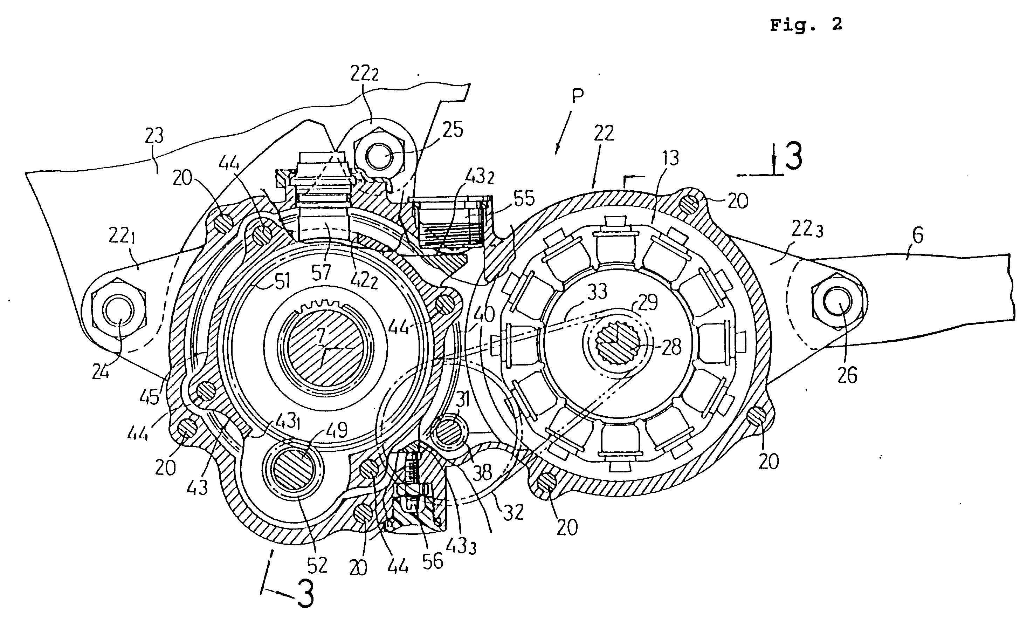

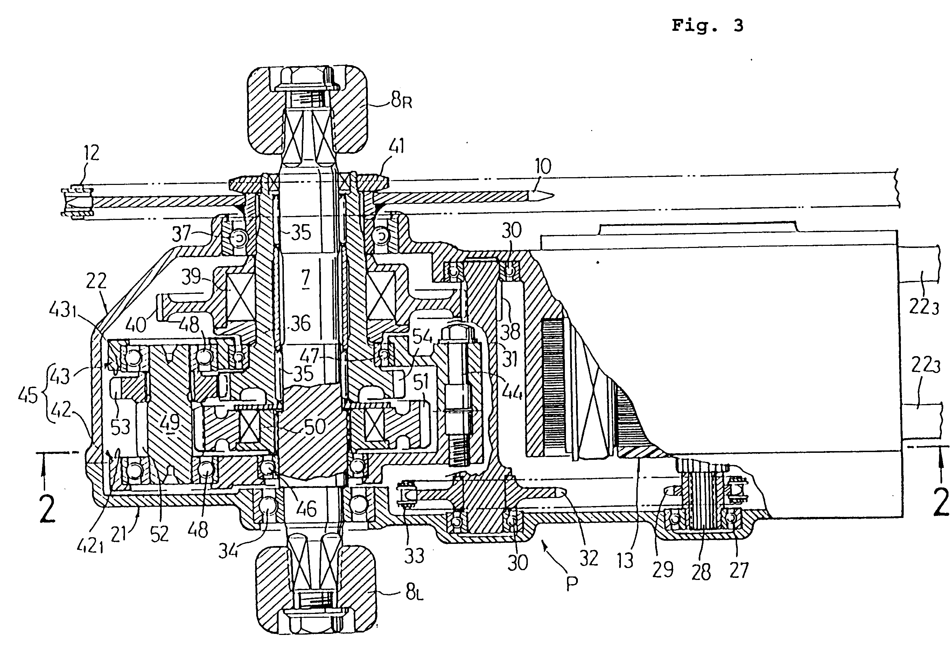

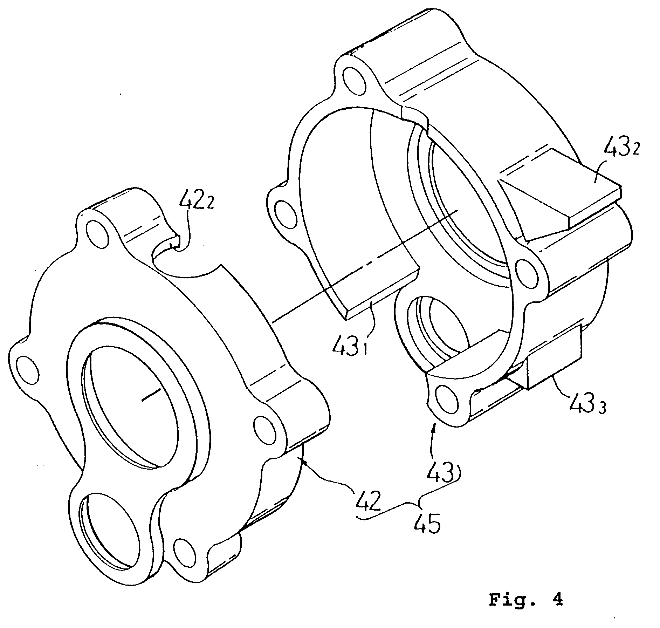

Fig. 1 to Fig. 4 illustrate the first embodiment of the present invention. Fig. 1 is a side view of a whole bicycle. Fig. 2 is a enlarged cross-sectional back view of a power unit on the line 2-2 of Fig. 3. Fig. 3 is a cross-sectional view on the line 3-3 of Fig. 2. Fig. 4 is an exploded perspective view of the gear holder.

As shown in Fig. 1, a bicycle B is provided with a V-shaped main frame 1 in the side view, handles 4 and a front wheel Wf are supported respectively on the top and bottom of a front fork 3 supported rotatably on a head pipe 2 provided on the front end of the main frame 1. The rear wheel Wr is supported by a rear fork 6 and 6 extending from the near bottom end of the main frame 1 backward which rear fork 6 and 6 is reinforced by a stay 5 and 5. The crank shaft 7 supported rotatably on the bottom end of the main frame is provided with a right and left pair of crank arms 8_{L} and 8_{R}, and the crank pedals 9_{L} and 9_{R} are provided at the ends of the crank arm 8_{L} and 8_{R}. A driving sprocket 10 rotated by the crank shaft 7 and a driven sprocket 11 provided on the wheel shaft of the rear wheel are connected with a chain 12, when the crank shaft 7 is rotated by pedaling force to the crank pedals 9_{L} and 9_{R}, the rotation is transmitted to the rear wheel Wr through the driving sprocket 10, chain 12, and driven sprocket 11.

The power unit P provided on the bottom of the main frame 1 is provided with the assisting motor 13 for generating driving force to assist the pedaling force of the crank pedals 9_{L} and 9_{R}. A running battery 15 comprising a plurality of Ni-Cd batteries for driving the assisting motor 13 is contained in a battery box 14 provided in front of the main frame 1. A controlling device 17 such as an electronic controlling unit and motor driver for controlling the driving of the assisting motor 13 is provided on the rear of the main frame 1.

Next, the structure of the power unit P is described in detail referring to Figs. 2 to 4.

The power unit P is provided with the left split housing 21 and right split housing 22 joined together with a plurality of bolts 20, mounting brackets 22₁ and 22₂ provided projectedly on the front face and top face of the right housing 22 are fixed on the power unit supporting member 23 welded on the bottom end of the main frame 1 with bolts 24 and 25, and the rear fork 6 and 6 is fixed on a right and left mounting brackets 22₃ and 22₃ provided projectedly on the back face of the right housing 22 with bolts 26 and 26.

The assisting motor 13 provided on the rear of the power unit P is provided with an output shaft 28 supported by a ball bearing 27 in the left housing 21, on the output shaft 28 the first sprocket 29 is fixed. An intermediate shaft 31 is supported on the left housing 21 and right housing 22 by a pair of ball bearings 30 and 30 in the front bottom of the assisting motor, and the second sprocket 32 fixed to the intermediate shaft 31 and the above-mentioned first sprocket 29 are connected with a chain.

The crank shaft 7 passing through from right to left at the front portion of the power unit P is supported by the left housing 21 through a ball bearing 34 at the left end, and supported by the right housing 22 through a pair of needle bearings 35 and 35 provided on the periphery of the crank shaft, a sleeve 36 engaged rotatably on the needle bearings 35 and 35, a ball bearing 37. The first spur gear 38 formed solidly with the intermediate shaft 31 is engaged with the second spur gear 40 supported on the periphery of the sleeve 36 through the first one-way clutch 39. The above-mentioned driving sprocket 10 is split-spline jointed on the right end of the sleeve 36 projecting outward from the right housing 22 and fixed with nuts 41.

Therefore, when the assisting motor rotates, the torque of the output shaft 28 is transmitted to the driving sprocket 10 through the first sprocket 29, chain 33, second sprocket 32, intermediate shaft 31, first spur gear 38, second spur gear 40, first one-way clutch 39, and sleeve 36, and then transmitted to the rear wheel Wr through chain 12 and driven sprocket 11. When the assisted running using the assisting motor 13 is not used, or when the driving by the assisting motor 13 is not in service, for example, because of exhaustion of the battery 15 for running, the first one-way clutch 39 slips so that the rotation of the driving sprocket 10 by pedaling force on the crank shaft 9L and 9R is not hindered. The one-way clutch 39 is provided on the down flow of the power transmission system from the assisting motor to driving sprocket 10, therefore, when running manually, the pedaling force to overcome the friction force of the above-mentioned power transmission system is unnecessary.

As it is obvious in Fig. 4, the gear holder 45 comprising the left half body 42 and right half body 43 combined with four bolts 44 is supported rotatably on the periphery of the crank shaft 7 and on the periphery of the sleeve 36 through the ball bearings 46 and 47. The idle shaft 49 is supported by the gear holder 45 through a pair of ball bearings 48 and 48, and the third spur gear 51 supported by the crank shaft 7 through the second one-way clutch 50 is engaged with the fourth spur gear 52 formed on the idle shaft 49. The fifth spur gear 53 fixed on the idle shaft is engaged with the sixth spur gear 54 formed on the sleeve 36. Notches 42₁ and 43₁ are formed on the left half body 42 and right half body 43 of the gear holder 45 to prevent the interference with the fifth spur gear 53.

Therefore, when the crank shaft 7 is rotated normally by pedaling the crank pedals 9_{L} and 9_{R}, the torque of the crank shaft 7 is transmitted to the driving sprocket 10 through the second one-way clutch 50, the third spur gear 51, fourth spur gear 52, idle shaft 49, fifth spur gear 53, sixth spur gear 54, and sleeve 36, then, transmitted to the rear wheel Wr through chain 12 and driven sprocket 11. When the crank shaft 7 is rotated reversely by pedaling the crank pedals 9_{L} and 9_{R}, or when pedaling on the crank pedals 9_{L} and 9_{R} is stopped during running and the crank shaft is brought to a stop, the second one-way clutch 50 is allowed to slip and the reverse rotation or stopped suspension of the crank shaft 7 is possible.

A pedaling force detecting projection 43₂ and stopper projection 43₃ are formed solidly on the periphery of the right half body 43 of the gear holder 45. The pedaling force sensor 55 comprising a thick film resistor type load cell fixed on the right housing 22 is in contact with the pedaling force detecting projection 43₂, a stopper bolt 56 screwed in the right housing 22 is in contact with the stopper projection 43₃. The rotation sensor 57 fixed on the right housing 22 is engaged loosely in a hole 42₂ formed on the left half body 42 of the gear holder 45, and facing to the periphery of the third spur gear 51. Signals from the pedaling force sensor 55 and rotation sensor 57 are processed in the controller 17, and based on the result, the operation of the assisting motor 13 is controlled.

Next, the operation of the embodiment in accordance with the present invention provided with the above-mentioned structure is described.

When a rider pedals the crank pedals 9_{L} and 9_{R} with the power switch 16 turned on to run assisted, the crank shaft 7 is rotated through the crank arms 8_{L} and 8_{R}, the torque of the crank shaft 7 is transmitted to the driving sprocket 10 through the second one-way clutch 50, third spur gear 51, fourth spur gear 52, idle shaft 49, fifth spur gear 53, sixth spur gear 54, and sleeve 36.

When, a rotational moment corresponding to the pedaling force is exerted to the gear holder 45, and works to rotate the gear holder 45 around the crank shaft 7 in the counterclockwise direction as shown in Fig. 2. As the result, the pedaling force detecting projection 43₂ provided on the right half body 43 of the gear holder 45 presses the sensing portion of the pedaling force sensor 55, thus the pedaling force is detected. The stopper projection 43₃ is in contact with the stopper bolt 56, thereby, also when a pedaling force is not exerted, the pedaling force detection projection 43₂ is maintained at the position facing to the sensing portion of the pedaling force sensor 55.

As described herein above, the controller 17 map-sorts the assisting torque based on the pedaling force detected by the pedaling force sensor 55 and the bicycle speed detected by the rotation sensor 57, and controls the driving of the assisting motor 13 to exert the assisting torque. As the result, the torque of the output shaft 28 of the assisting motor 13 is transmitted to the driving sprocket 10 through the first sprocket 29, chain 33, second sprocket 32, intermediate shaft 31, first spur gear 38, second spur gear 40, first one-way clutch 39, and sleeve 36, thus, the running is assisted by the assisting motor 13.

As described herein above, neither a planetary gear mechanism having many parts nor a bevel gear which is low in power transmission efficiency is used for power transmission of the power unit P, necessary minimum number of simple spur gears, sprockets, and chains is used, thus, simplified structure and improved power transmission efficiency are realized. The pedaling force on the crank pedals 9_{L} and 9_{R} is detected based on the rotational moment exerted to the gear holder, therefore, the influence of frictional forces of parts are suppressed to the minimum, thereby, the pedaling force is detected precisely.

In the case of a bicycle having the rear wheel Wr with a small diameter, a driving sprocket 10 with a large diameter is required, however, in the present invention by using a spur gear arrangement comprising the third spur gear 51, fourth spur gear 52, fifth spur gear 53, and sixth spur gear 54 with a suitably prescribed gear ratio, the use of a large driving sprocket 10 is avoidable.

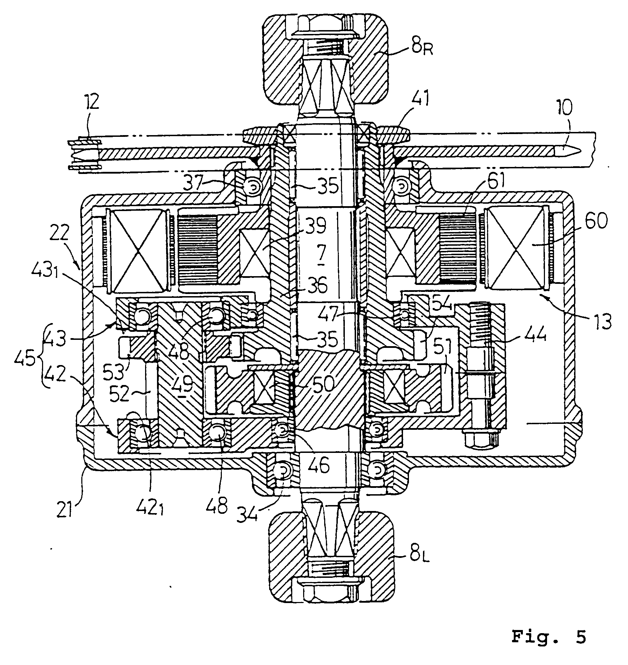

Next, the second embodiment of the present invention is described referring to Fig. 5.

The second embodiment is an example in which the assisting motor 13 is provided coaxially with the crank shaft 7 to minimize the power unit P. In detail, the assisting motor 13 is provided with a stator 60 fixed on the inside face of the right housing 22 and rotors 61 supported on the periphery of the sleeve through the first one-way clutch 39, the torque of the assisting motor 13 is transmitted directly to the sleeve 36 through the first one-way clutch 39.

According to the second embodiment, the first sprocket 29, chain 33, second sprocket 32, intermediate shaft 31, first spur gear 38, and second spur gear 40 of the first embodiment is needless, the number of necessary parts are further reduced and the size of the power unit is further minimized.

The embodiments of the present invention is described hereinbefore in detail, however, the design can be changed variously within the scope of the present invention.

For example, a thick film resistor type load cell is described as the pedaling force sensor 55 in the embodiment, however otherwise, minimized deformation sensors such as strain gauge type load cell and piezoelectric element may be used. The assisting motor 13 may be provided separately instead of the assisting motor 13 incorporated in the power unit P.

Summarizing the present invention the structure of the pedaling force detecting device of crank pedals of a motor assisted bicycle is simplified, and detecting precision is improved.

The gear holder 45 and driving sprocket 10 are supported rotatably on the periphery of the crank shaft 7 rotated by the crank pedals, the torque of the crank shaft 7 is transmitted to the driving sprocket 10 through a spur gear arrangement comprising four spur gears 51 to 54 via the idle shaft 49 provided to the gear holder 45. The torque of the assisting motor 13 is transmitted to the driving sprocket 10 through the chain 33 wound around the sprockets 29 and 32 and two spur gears 38 and 40. The pedaling force on the crank pedals is detected based on the rotational moment which is exerted in the direction to rotate the gear holder around the crank shaft 7 corresponding to the pedaling force.

## Claims

1. A motor assisted bicycle with a pedaling force detecting device said bicycle having a power transmission device for transmitting pedaling force on crank pedals (9_{L} and 9_{R}) to a wheel (Wr) and having an assisting motor (13), the output of which is controlled in dependency of a pedaling force produced by operation of the crank pedals (9_{L} and 9_{R}) and detected by a pedaling force detecting means (55), wherein said bicycle is provided with
- a gear holder (45) supported rotatably on the periphery of a crank shaft (7) carrying the crank pedals,
- an output member (10) for transmitting a torque to the wheel (Wr) supported rotatably on the periphery of the crank shaft (7), and
- a spur gear arrangement (51 to 54) for transmitting the rotational moment of the crank shaft (7) to the output member (10) through an idle shaft (49) supported in parallel to the crank shaft (7),
characterized in that
the idle shaft (49) is supported in the gear holder (45), and the pedaling force detecting means (55) is arranged for detecting a pedaling force as a rotational moment around the crank shaft (7) exerted on the gear holder (45).

2. The motor assisted bicycle with a pedaling force detecting device as claimed in claim 1,
wherein the gear holder (45) is accommodated in housings (21 and 22) supporting the crank shaft (7), a pedaling force detecting projection (43₂) provided on the gear holder (45) is structured so as to be in contact with the pedaling force detecting means (55) provided on the housings (21 and 22).

3. The motor assisted bicycle with a pedaling force detecting device as claimed in claim 1,
wherein rotors (61) of the assisting motor (13) are located so as to surround the periphery of the crank shaft (7), and the rotors (61) are connected to the output member (10) through a first one-way clutch (39).

4. The motor assisted bicycle with a pedaling force detecting device as claimed in claim 1,
wherein a second one-way clutch (50) is provided to the spur gear arrangement (51 to 54) for transmitting the torque of the crank shaft (7) to the output member (10) through the idle shaft (49).

## Patentansprüche

1. Fahrrad mit Hilfsmotor mit einer Pedalkrafterfassungsvorrichtung, wobei das Fahrrad eine Kraftübertragungsvorrichtung zur Übertragung von auf Kurbelpedale (9_{L} und 9_{R}) wirkender Pedalkraft zu einem Rad (Wr) aufweist und einen Hilfsmotor (13) aufweist, dessen Ausgabe in Abhängigkeit von einer Pedalkraft gesteuert/geregelt wird, die durch Betätigung der Kurbelpedale (9_{L} und 9_{R}) erzeugt und durch ein Pedalkrafterfassungsmittel (55) erfaßt wird, wobei das Fahrrad versehen ist mit
einem Getriebehalter (45), der am Umfang einer die Kurbelpedale tragenden Kurbelwelle (7) drehbar gelagert ist, einem am Umfang der Kurbelwelle (7) drehbar gelagerten Ausgangselement (10) zur Übertragung eines Drehmoments zu dem Rad (Wr), und
einer Stirnradanordnung (51 bis 54) zur Übertragung des Drehmoments der Kurbelwelle (7) zu dem Ausgangselement (10) durch eine parallel zur Kurbelwelle (7) gelagerte Laufwelle (49),
dadurch gekennzeichnet, daß
die Laufwelle (49) in dem Getriebehalter (45) gelagert ist und das Pedalkrafterfassungsmittel (55) angeordnet ist, um eine Pedalkraft als ein um die Kurbelwelle (7) auf den Getriebehalter (45) ausgeübtes Drehmoment zu erfassen.

2. Fahrrad mit Hilfsmotor mit einer Pedalkrafterfassungsvorrichtung nach Anspruch 1,
wobei der Getriebehalter (45) in die Kurbelwelle (7) haltenden Gehäusen (21 und 22) aufgenommen ist, wobei ein an dem Getriebehalter (45) vorgesehener Pedalkrafterfassungsvorsprung (43₂) so strukturiert ist, daß er mit dem an den Gehäusen (21 und 22) vorgesehenen Pedalkrafterfassungsmittel (55) in Kontakt steht.

3. Fahrrad mit Hilfsmotor mit einer Pedalkrafterfassungsvorrichtung nach Anspruch 1,
wobei Rotoren (61) des Hilfsmotors (13) so angeordnet sind, daß sie den Umfang der Kurbelwelle (7) umgeben, und wobei die Rotoren (61) durch eine erste Einwegkupplung (39) mit dem Ausgangselement (10) verbunden sind.

4. Fahrrad mit Hilfsmotor mit einer Pedalkrafterfassungsvorrichtung nach Anspruch 1,
wobei an der Stirnradanordnung (51 bis 54) eine zweite Einwegkupplung (50) vorgesehen ist, um das Drehmoment der Kurbelwelle (7) durch die Laufwelle (49) zu dem Ausgangselement (10) zu übertragen.

## Revendications

1. Une bicyclette assistée à moteur pourvue d'un dispositif de mesure de la force de pédalage, ladite bicyclette ayant un dispositif de transmission de puissance conçu pour transmettre la force de pédalage exercée sur des pédales de pédalier (9_{L} et 9_{R}) à une roue (Wr) et ayant un moteur auxiliaire (13), dont la puissance est commandée d'après la force de pédalage produit par l'actionnement des pédales de pédalier (9_{L} et 9_{R}) et mesurée par des moyens de mesure de la force de pédalage (55), dans laquelle ladite bicyclette comprend :
- un support de roue dentée (45) monté tournant sur la périphérie d'un pédalier (7) portant les pédales de pédalier,
- un organe de sortie (10) conçu pour transmettre un couple à la roue (Wr) supporté à rotation sur la périphérie du pédalier (7), et
- un agencement de pignon droit (51 à 54) conçu pour transmettre le couple de rotation du pédalier (7) à l'organe de sortie (10) via un axe de renvoi (49) supporté en parallèle par rapport au pédalier (7), caractérisée en ce que
l'axe de renvoi (49) est monté dans le support de pignon (45), et les moyens de mesure de la force de pédalage (55) sont agencés de façon à mesurer la force de pédalage à titre de couple de rotation autour du pédalier (7), exercé sur le support de pignon (45).

2. Bicyclette assistée à moteur pourvue d'un dispositif de mesure de la force de pédalage selon la revendication 1, dans laquelle le support de pignon (45) est logé dans des boîtiers (21 et 22) supportant le pédalier (7), une saillie de mesure de la force de pédalage (43₂) prévue sur le support de pignon (45) étant conçue de manière à être en contact avec les moyens de mesure de la force de pédalage (55) prévus sur les boîtiers (21 et 22).

3. Bicyclette assistée à moteur pourvue d'un dispositif de mesure de la force de pédalage selon la revendication 1, dans laquelle des rotors (61) du moteur auxiliaire (13) sont placés de manière à entourer la périphérie du pédalier (7), et les rotors (61) sont reliés à l'arbre de sortie (10) via un premier embrayage à roue libre (39).

4. Bicyclette assistée à moteur pourvue d'un dispositif de mesure de la force de pédalage selon la revendication 1, dans laquelle un deuxième embrayage à roue libre (50) est prévu sur l'agencement de pignon droit (51 à 54) afin de transmettre le couple du pédalier (7) à l'organe de sortie (10) via l'axe de renvoi (49).
